# EUROPEAN PATENT APPLICATION

(11) **EP 2 503 707 A1**
(43) Date of publication of application: **26.09.2012**
(21) Application number: 12160455.7
(22) Date of filing: 20.03.2012
(51) Int. Cl.: H04B 7/12

(54) **Triple redundant RF link system**

(30) Priority: 24.03.2011 US 201113070750
(71) Applicant: Honeywell International, Inc., Morristown, NJ 07962-2245 (US)
(72) Inventor: Goulbourne, Curtis, Morristown, NJ 07962-2245 (US); Altan, Halil N., Morristown, NJ 07962-2245 (US); Haque, Jamal, Morristown, NJ 07962-2245 (US)
(74) Representative: Buckley, Guy Julian

(57) **Abstract**

A system comprises an outer shell having an inner spherical cavity and an inner sphere located in the spherical cavity. The inner sphere comprises a sensor; at least three transmit antennas; and at least three transmitters each coupled to the sensor and to a respective one of the at least three transmit antennas. The system comprises at least three receive antennas each located in the spherical cavity, wherein each of the at least three receive antennas is frequency matched to a transmit frequency of a respective one of the at least one transmit antennas. The system also comprises at least three receivers each coupled to a respective one of the at least three receive antennas and a data selection logic circuit configured to select at least one signal from the signals received from each of the at least three receivers based on the respective signal quality of the received signals.

## Description

### CROSS-REFERENCE TO RELATED APPLICATIONS

This application is related to United States patent application serial number 13/070,725 (attorney docket number H0028909-5478) entitled "RF DATA TRANSFER IN A SPHERICAL CAVITY" filed on even date herewith and which is referred to herein as the '909 application. The '909 application is hereby incorporated herein by reference.

### BACKGROUND

In data communication systems, certain environments can cause multi-path signals to be received at the same receiver. In other words, copies of the signal radiated from a transmit antenna travel different paths to the receiver antenna. The different paths result in phase differences which causes interference and noise at the receiver antenna.

### SUMMARY

In one embodiment, a system is provided. The system comprises an outer shell having an inner spherical cavity and an inner sphere located in the spherical cavity of the outer shell. The inner sphere comprises a sensor configured to obtain data; at least three transmit antennas each configured to radiate signals at a respective transmit frequency; and at least three transmitters each coupled to the sensor and to a respective one of the at least three transmit antennas, each of the at least three transmitters configured to control transmission of the sensor data via the respective at least one transmit antennas. The system also comprises at least three receive antennas each located in the spherical cavity of the outer shell, wherein each of the at least three receive antennas is frequency matched to the transmit frequency of a respective one of the at least one transmit antennas. The system also comprises at least three receivers each coupled to a respective one of the at least three receive antennas, each of the at least three receivers configured to process a signal received at the respective receive antenna; and a data selection logic circuit coupled to the at least three receivers and configured to select at least one signal from the signals received from each of the at least three receivers based on the respective signal quality of the received signals.

### DRAWINGS

Understanding that the drawings depict only exemplary embodiments and are not therefore to be considered limiting in scope, the exemplary embodiments will be described with additional specificity and detail through the use of the accompanying drawings, in which:

Figure 1 is a block diagram of one embodiment of a sensor system having a spherical cavity.

Figure 2 is a flow chart depicting one embodiment of a method of transferring data in a system having a spherical cavity.

Figure 3 is a flow chart depicting one embodiment of a method of selecting a signal.

Figure 4 is a flow chart depicting another embodiment of a method of selecting a signal.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed. The following detailed description is, therefore, not to be taken in a limiting sense.

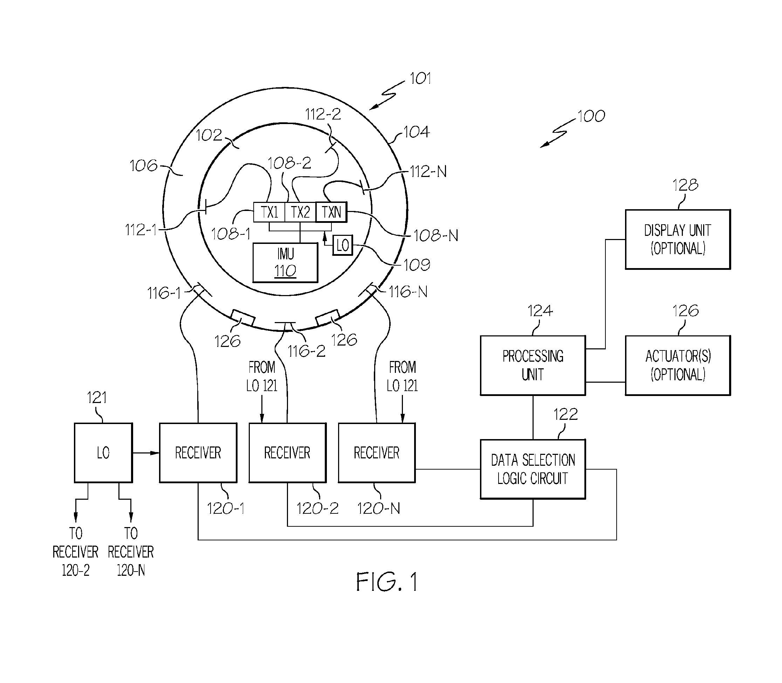

Figure 1 is a block diagram of an exemplary embodiment of a sensor system 100. The sensor system 100 includes a sensor unit 101 that has a spherical cavity 106 through which data is transferred. In particular, the sensor unit 101 includes an inner sphere 102 and an outer shell 104. The outer shell 104, in this embodiment, is also spherical. However, it is to be understood that the outer shell 104 can also be implemented with other configurations. For example, the outer shell 104 can be implemented with a square outer surface and a spherical inner surface that forms the spherical cavity 106 into which the inner sphere 102 is deposited. The inner sphere 102 is suspended inside the outer shell 104 such that the outer surface of the inner sphere 102 does not contact the inner surface of the outer shell 104. Thus, the inner sphere 104 is capable of rotating in any direction. For example, the inner sphere 104 is supported by bearings 126, such as gas bearing pads described in U.S. Patent Application Publication No. 2006/0054660, which is hereby incorporated herein by reference. However, the inner sphere 104 can also be separated from the outer shell 106 by ball bearings, in other embodiments. Exemplary configurations of the inner sphere 102 and outer shell 104 are described in more detail in U.S Patent no 7,698,064, which is hereby incorporated herein by reference.

In the exemplary embodiment of Fig. 1, the inner sphere 102 includes a sensor 110 and a plurality of transmitters 108-1...108-N. In this example, the sensor 110 is implemented as an inertial measurement unit (IMU) having one or more linear accelerometers and/or one or more gyroscopes. However, it is to be understood that other sensor types can be used in other embodiments. For example, in other embodiments, the sensor 110 can be implemented as a health monitoring sensor which monitors the status of the components located in the inner sphere 102.

The sensor 110 provides data to the transmitters 108-1 ... 108-N for transmission through the spherical cavity 106. In particular, the sensor 110 provides the same data to each of the plurality of transmitters 108-1 ... 108-N. Each of the transmitters 108-1 ... 108-N control modulation of a signal radiated from a respective one of a plurality of transmit antennas 112-1 ... 112-N. Each of the transmit antennas 112-1 ... 112-N is configured to radiate signals at a predetermined transmit frequency. The predetermined frequency for each transmit antenna 112 is different than the predetermined transmit frequency of the other transmit antennas 112. For example, in one embodiment, transmit antenna 112-1 is configured to transmit at 900 MHz, transmit antenna 112-2 is configured to transmit at 2.4 GHz, and the transmit antenna 112-N is configured to transmit at 5.6 GHz. It is to be understood that these transmit frequency values are provided by way of example and not by way of limitation. In particular, each of the transmit antennas 112 can be configured to transmit in any appropriate radio frequency band such as the Ultra High Frequency (UHF) band, S-band, or L-band. Each transmitter 112-1 ... 112-N is fed by the same oscillator clock source 109 for data coherency. The inner sphere 102 includes a respective slit or opening for each of the transmit antennas 112 to transmit data. Thus, in this example, the transmit antennas 112 are isolated inside the inner sphere 102 to reduce noise.

Located inside the spherical cavity 106 are a plurality of receive antennas 116-1 ... 116-N. For example, in some embodiments, each receive antenna 116 is located in a position that is approximately ½ wavelength from the other transmit antennas. The wavelength is the wavelength corresponding to the respective signal frequency received at receive antennas 116. However, it is to be understood that the location of the receive antennas 116-1 ... 116-N may be different in other embodiments based on various factors, such as, sizes of sphere 102 and shell 104, and configuration of components in the spherical cavity 106.

Each receive antenna 116 is frequency matched to the transmit frequency of one of the transmit antennas 112. For example, receive antenna 116-1, 116-2, and 116-N can be frequency matched to the transmit frequency of transmit antenna 112-1, 112-2, and 112-N, respectively. Due to the spherical cavity 106 and movement of the inner sphere 102 in the spherical cavity 106, each of receive antennas 116-1 ... 116-N receives multiple versions of the same signal, each version travelling a different path. The multi-path signals received at each antenna 116 can cause increased noise or interference in the signal received. In addition, as the inner sphere 102 moves within the spherical cavity 106, one of the receive antennas 116 can be blocked by other components in the spherical cavity 106 which further reduces the signal to noise ratio. However, since the signals transmitted by the transmit antennas 112-1 ... 112-N are redundant, when one of the receive antennas 116-1 ... 116-N is blocked, the other antennas 112 are located to be off-centered from the blocking component.

Furthermore, the system 100 is configured to mitigate the interference effects of the multi-path signals. In particular, each transmit antenna 112-1 ... 112-N is coupled to a respective receiver 120-1 ... 120-N. Each receiver 120 is configured to demodulate the signal received from its respective receive antenna 116 and bit synchronize the demodulated signal data. In some embodiments, each transmitted signal includes error coding such as Forward Error Coding (FEC). In such embodiments, each receiver 120 uses the FEC to correct errors if applicable. Each receiver 120 is coupled to the same oscillator clock 121 for data coherency. The bit rate time coherent (synchronized) data from each of the receivers 120 is provided to a data selection logic circuit 122.

The data selection logic circuit 122 is configured to determine the quality of the respective data signals received from the receivers 120-1 ... 120-N. Based on the respective signal quality, the data selection logic circuit 122 selects at least one data signal to be passed on to a processing unit 124. In this example, the data selection logic circuit 122 uses a cyclic redundancy check (CRC) to determine the quality of each respective data signal. In some embodiments, the data selection logic circuit 122 selects a subset of the total number of data signals received. In particular, the data selection logic circuit 122 selects the subset of signals having the higher quality based on the CRC. For example, in embodiments using three redundant data signals, the data selection logic circuit 122 can be configured to select the two signals with the better quality. In other embodiments, the data selection logic circuit 122 is configured to select the single data signal with the best quality of the plurality of data signals received.

A signal having better quality can be determined by comparing the CRC values. For example, each block of data in a given signal is sent with a calculated check value or CRC. The data selection logic circuit 122 calculates the CRC for each block of data and compares the calculated result to the CRC sent with the block of data. If they match, no error is detected in that block of data. Signals having better quality will have fewer blocks of data with detected errors. In other words, by comparing the number of detected errors for each signal, the data selection logic circuit 122 is able to determine which signals have better quality.

In other embodiments, the data selection logic circuit 122 is configured to select a user defined default signal provided that the default signal passes a quality check. For example, if a user configures the data selection logic circuit 122 to select the signal from receiver 120-1 as the default signal, then data selection logic circuit 122 checks the CRC of the blocks in the signal from the receiver 120-1. If the signal passes the CRC check, then the data selection logic circuit 122 selects the signal from receiver 120-1. For example, if the number of detected errors is less than a predetermined threshold, the signal passes the CRC check. If the signal does not pass the CRC check, then the data selection logic circuit 122 checks the CRC of one of the other signals and selects the next signal which passes the CRC check.

The data selection logic circuit 122 outputs the selected signal to a processing unit 124. The processing unit 124 uses the selected signal from the data selection logic circuit 122 for additional processing depending on the implementation of the sensor 110. For example, in some embodiments, the sensor 110 is an IMU that outputs inertial navigation data which is used by the processing unit 124 in calculating navigation parameters. The navigation parameters can be output to a display unit 128 for display to a user. In addition, the navigation parameters can be commands output to one or more actuators to control movement of a vehicle in which the sensor system 100 is located. The implementation of the actuators is dependent on the vehicle. For example, in an aircraft, the processing unit can output commands to control engine thrust, wing flaps, etc. It is to be understood that implementations of the sensor system 100 are not to be limited to navigation sensors and data and that other sensor systems can communicate other data from the sensor 110 to the receiver 120 via the spherical cavity 106.

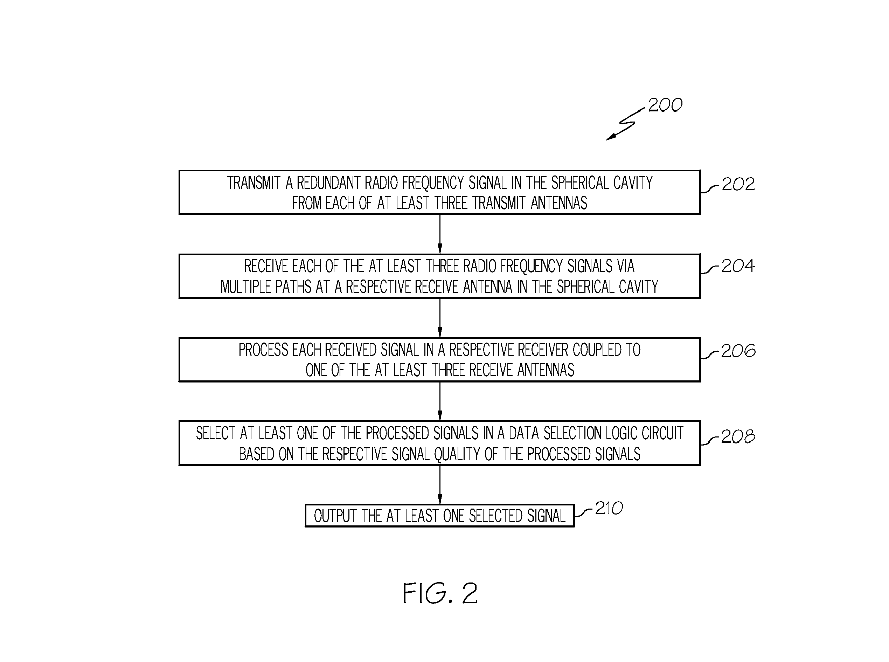

Figure 2 is a flow chart depicting an exemplary method 200 of transferring data in a system having a spherical cavity such as system 100 described above. At block 202, a radio frequency signal is transmitted from each of at least three transmit antenna located on an inner sphere in the spherical cavity. The signal transmitted from each transmit antenna is redundant to the others. In addition, each transmit antenna is configured to transmit the respective signal at a different transmit frequency than the other transmit antennas.

At block 204, each of the transmitted signals is received via multiple paths at a respective one of at least three receive antennas located in the spherical cavity. Each of the at least three receive antennas is frequency matched to one of the at least three transmit antennas. At block 206, each of the received signals is processed in a respective receiver located outside the spherical cavity. Processing the signals includes demodulating and bit synchronizing the received signals. In particular, each receiver is coupled to the same local oscillator for data coherency between the different receivers. In addition, in some embodiments, processing the signals includes performing error correction using coding such as forward error coding.

At block 208, the processed signals from each of the receivers is provided to a data selection logic circuit where at least one of the signals is selected based on the respective signal quality of the signals. For example, the signal quality can be determined using a CRC calculation for the data blocks in each signal. At block 210, the at least one selected signal is output. For example, the at least one selected signal can be output to a processing unit for navigation or other processing as described above.

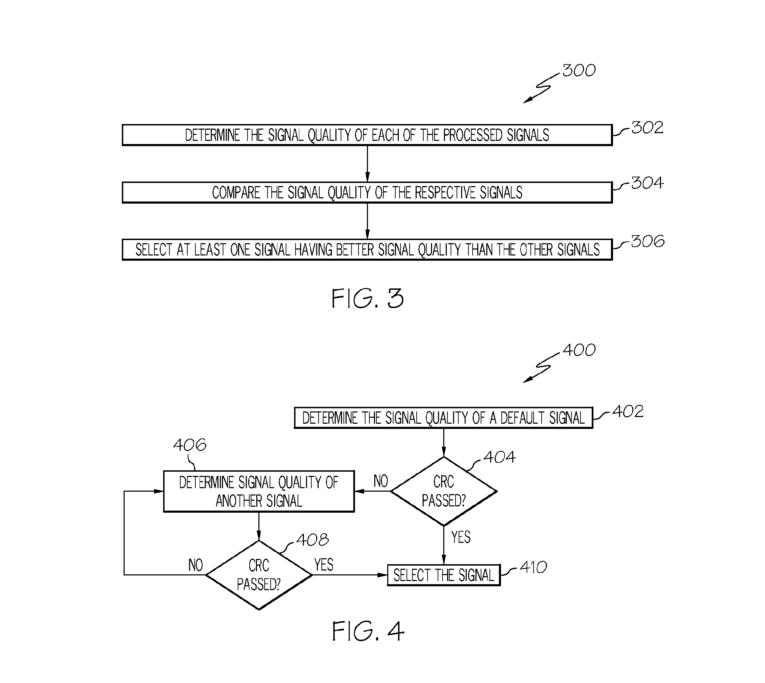

Figure 3 depicts one exemplary method 300 of selecting at least one of the signals. At block 302, the signal quality of each of the received signals is determined. The signal quality of each signal can be based on the number of detected errors using, for example, a CRC check of each data block. At block 304, the signal quality of each signal is compared to the signal quality of the other signals. At block 306, at least one signal is selected which has the fewest detected errors. That is the signal having the best signal quality is selected in some embodiments. In some embodiments, more than one signal is selected. For example, two of the at least three signals having the best signal quality are selected. In some embodiments in which more than one signal is selected, the selected signals are combined, such as through direct summing or by weighting each signal based on its respective signal quality.

Figure 4 is a flow chart depicting another exemplary method 400 of selecting at least one of the signals in the data selection logic circuit. At block 402, the signal quality of a default signal is determined. The default signal can be determined *a priori* by a user. At block 404, the signal quality of the default signal is compared to a threshold. For example, the total number of detected errors, such as through a CRC check of each data block, is compared to a predetermined threshold. If the total number of detected errors is less than the threshold, then the default signal passes the check and is selected at block 410.

If the total number of detected errors is greater than the threshold, then the default signal does not pass the quality check and the signal quality of a second signal is determined at block 406. The second signal to be checked can also be predetermined by a user. At block 408, the signal quality of the second signal is checked. If the second signal passes the quality check, then the second signal is selected at block 410. If the second signal does not pass the quality check, then the signal quality of another signal is determined at block 406. The acts of blocks 406 and 408 are then repeated until either a signal is found that passes the quality check or no more signals remain to be checked.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

## Claims

1. A system (100) comprising:
an outer shell (104) having an inner spherical cavity (106);
an inner sphere (102) located in the spherical cavity of the outer shell, the inner sphere comprising:
a sensor (110) configured to obtain data;
at least three transmit antennas (112-1 ... 112-N) each configured to radiate signals at a respective transmit frequency; and
at least three transmitters (108-1 ... 108-N) each coupled to the sensor and to a respective one of the at least three transmit antennas, each of the at least three transmitters configured to control transmission of the sensor data via the respective at least one transmit antennas;
at least three receive antennas (116-1 ... 116-N) each located in the spherical cavity of the outer shell, wherein each of the at least three receive antennas is frequency matched to the transmit frequency of a respective one of the at least one transmit antennas;
at least three receivers (120-1 ... 120-N) each coupled to a respective one of the at least three receive antennas, each of the at least three receivers configured to process a signal received at the respective receive antenna; and
a data selection logic circuit (122) coupled to the at least three receivers and configured to select at least one signal from the signals received from each of the at least three receivers based on the respective signal quality of the received signals.

2. The system of claim 1, wherein each of the at least three receive antennas is separated from at least one of the other receive antennas by approximately a half-wavelength of the respective transmit frequency.

3. The system of claim 1, wherein all of the at least three receivers are coupled to a single local oscillator (121); wherein each of the at least three receivers is configured to demodulate and bit synchronize the respective signals using the single local oscillator.

4. The system of claim 1, wherein the data selection logic circuit is configured to determine the signal quality of each signal from the at least the three receivers; to compare the determined signal quality of each signal with the determined signal quality of the other signals; and to select at least one signal having a higher signal quality than the other signals.

5. The system of claim 4, wherein the data selection logic circuit is configured to select a subset of the signals from the at least three receivers, each of the signals in the selected subset having a signal quality that is higher than the signal quality of the signals not in the selected subset;
wherein the data selection logic circuit is configured to combine the selected subset of signals into a single signal based on one of:
direct summing of the signals in the selected subset; or
weights for each signal in the selected subset, the weights based on the respective signal quality of the signals in the selected subset.

6. The system of claim 1, wherein the data selection logic circuit is configured to calculate a signal quality of a default signal from the signals received from the at least three receivers; to select the default signal if the signal quality of the default signal passes a signal quality check; and to select a second signal if the default signal does not pass the signal quality check and the second signal does pass the signal quality check;
wherein the data selection logic circuit is configured to check the signal quality of the default signal by calculating the total number of detected errors in the default signal and compare the total number of detected errors to a threshold; and
wherein if the total number of detected errors is less than the threshold, the default signal is determined to pass the signal quality check.

7. A method (200) of transferring data in a system having a spherical cavity, the method comprising:
transmitting a radio frequency signal in the spherical cavity from each of at least three transmit antennas at a respective transmit frequency, the data transmitted from each of the at least three transmit antennas being the same (202);
receiving one of the transmitted signals at each of at least three receive antennas located in the spherical cavity, each of the at least three receive antennas frequency matched to a respective one of the at least three transmit antennas (204);
demodulating each of the received signals in a respective one of at least three receivers, each of the at least three receivers coupled to a respective one of the at least three antennas (206); and
selecting at least one of the demodulated signals based on the respective signal quality of the demodulated signals (208).

8. The method of claim 7, wherein selecting at least one of the demodulated signals comprises:
determining the signal quality of each of the demodulated signals (302);
comparing the signal quality of each of the demodulated signals to the signal quality of the other demodulated signals (304); and
selecting at least one of the demodulated signals that has a better signal quality than the other demodulated signals (306).

9. The method of claim 8, wherein selecting at least one of the demodulated signals that has a better signal quality comprises selecting two or more of the demodulated signals, wherein each of the two or more selected signals has a better signal quality than the non-selected demodulated signals.

10. The method of claim 7, wherein selecting at least one of the demodulated signals comprises:
determining a total number of errors in a default signal (402);
comparing the total number of errors in the default signal to a threshold (404);
if the total number of errors is less than the threshold, selecting the default signal (410).
